# EUROPEAN PATENT APPLICATION

(11) **EP 4 424 403 A1**
(43) Date of publication of application: **04.09.2024**
(21) Application number: 23158911.0
(22) Date of filing: 28.02.2023
(51) Int. Cl.: B01D 46/10, B01D 46/54

(54) **VENTING UNIT FOR VENTING A MACHINERY SPACE**

(71) Applicant: MANN+HUMMEL GmbH, 71636 Ludwigsburg (DE)
(72) Inventor: ZBIRAL, Robert, 71672 Marbach (DE); KLOFT, Tatiana, 71638 Ludwigsburg (DE)
(74) Representative: Mann + Hummel Intellectual Property

(57) **Abstract**

A venting unit (100) for venting a machinery space includes a support element (10) with a front side (36) and a rear side (37) that are related to an axial direction (42), and mounting elements (12) and a sealing element (14) for being mounted with the rear side (37) in a substantially fluid tight manner to an opening of the machinery space, the support element (10) having a fluid permeable passageway (16) for venting, and the sealing element (14) being arranged surrounding the passageway (16). The venting unit (100) further includes a semi-permeable membrane (40) covering the passageway (16) and being arranged at the support element (10) in a fluid tight manner, and a filter element (50) being arranged at the support element (10), within the passageway (16), and between the semi-permeable membrane (20) and the machinery space. The filter element (50) includes a depth and/or surface filtration medium (52).

## Description

### Technical Field

The invention relates to a venting unit for venting a machinery space.

### Background Art

EP 2 007 500 B1 discloses a vent for an enclosure containing lubricated machinery. The vent comprises a body having a passageway there through and a gas permeable, water impermeable membrane covering the passageway. Further, the vent comprises a fibrous sorbent disposed within the passageway between the machinery space and the membrane.

### Summary

It is an object of the invention to provide an improved venting unit for venting a machinery space.

According to an aspect of the invention, the object is achieved by a venting unit for venting a machinery space, the venting unit including a support element with a front side and a rear side that are related to an axial direction, and mounting elements and a sealing element for being mounted with the rear side in a substantially fluid tight manner to an opening of the machinery space, the support element having a fluid permeable passageway for venting, and the sealing element being arranged surrounding the passageway. The venting unit further includes a semi-permeable membrane covering the passageway and being arranged at the support element in a fluid tight manner, a filter element being arranged at the support element, within the passageway, and between the semi-permeable membrane and the machinery space. The filter element includes a depth and/or surface filtration medium.

Advantageous embodiments are described in the dependent claims, the description, and the drawings.

Advantageously the proposed venting unit is adapted for venting machinery spaces in which fine particles and/or small oil droplets are created by a mechanically moving system and thus an aerosol can form. Such machinery spaces may comprise functional spaces of electro motors in which brushes are located, mechanical gears, mechanical clutches, mechanical brakes.

The venting unit is intended to prevent very fine particles and/or oil droplets that are harmful to health from escaping from these rooms or chambers and thus polluting the environment directly or indirectly via other rooms or chambers. In the event that high-voltage components are located in one of the following rooms, a potential short circuit, for example in the form of a high-energy arc, can be effectively prevented. On the one hand, small, suspended, electrically conductive particles can significantly increase the electrical conductivity of the air, and on the other hand, small electrically conductive particles can, by being agglomerated on a surface and, lead to an undesirable leakage current or short circuit.

By the proposed venting unit the penetration of water can be reliably prevented and thus the mechanical system can be protected, which is particularly desirable in the case of an electro-mechanical system, in order to protect it from a short circuit.

Thus the venting unit may serve as a pressure compensation element, such as the semi-permeable membrane, that is suitably permeable to air but sufficiently watertight and also reliably prevents particles up to a certain degree of fineness from passing through it.

Advantageously, the filter element may protect the semi-permeable membrane which usually reacts sensitively to contact with aerosols containing particles and/or oil droplets in such a way that the gas permeability and thus the pressure equalization capacity decreases the longer this exposure is present. The filter element consisting of a suitable filter medium favorably serves as a protection against particles and/or oil droplets. This filter element prevents increasing blocking of the semi-permeable membrane and extends its function significantly, if possible over its entire service life.

An application example may be an electric motor which has a closed functional space in which the brushes are located. Due to the constant contact with the slip ring, abrasion in the form of very small particles occurs during rotation, which are capable of increasingly blocking the semi-permeable membrane. Due to an oil-lubricated bearing of the rotor or an adjacent oil-filled functional space for the rotor, fine oil droplets may also be present. By the filter element blocking of the semi-permeable membrane and thus the venting unit may be reduced to an absolute minimum.

Advantageously the filter element may be integrated in the venting unit close to the semi-permeable membrane. The filter element may favorably be connected in series upstream of the semi-permeable membrane to be protected, according to the gas flowing out of the housing to reduce pressure.

The semi-permeable membrane may be provided in the form of a microporous film, comprising in particular a fluoropolymer, in particular a polytetrafluoroethylene. The thickness of the semi-permeable membrane may be smaller by a multiple than a thickness of the depth and/or surface filtration medium of the filter element. In particular, the thickness of the semi-permeable membrane may be at least 10 times, in particular, at least 20 times, smaller than a thickness of the depth and/or surface filtration medium.

According to a favorable embodiment of the venting unit, the depth and/or surface filtration medium may comprise a nonwoven and/or a woven, as a flat filter element, in particular in a multiple folded configuration, and/or an open-celled foam-like medium, and/or a sponge-like medium, and/or a sintered thermoplastics or metal. Thus advantageous filtering of the small particle and/or oil droplets out of the machinery space may be achieved.

According to a favorable embodiment of the venting unit, the nonwoven and/or woven may comprise glass fibers with a diameter between 5 µm and 20 µm, preferably between 9 µm and 15 µm, preferably from mechanically bonded carded nonwovens made from textile glass staple fibers. Additionally or alternatively, the foam-like medium may have a porous structure between 20 ppi (pores per inch) and 150 ppi, preferably between 30 ppi and 120 ppi. Additionally or alternatively, the sponge-like medium may have a packing density between 10% and 22%, preferably between 3% and 15%, particularly preferred between 5% and 10%. Additionally or alternatively, the sintered thermoplastics may have a pore size between 1 ppi and 500 ppi, preferably between 2 ppi and 400 ppi, particularly preferred between 3 µm and 300 µm, and have a packing density between 4% and 90%, preferably between 6% and 80%. The sintered metal may have a pore size between 0.1 µm and 300 µm, preferably between 0.5 µm and 200 µm. Thus advantageous filtering of the small particle and/or oil droplets out of the machinery space may be achieved.

According to a favorable embodiment of the venting unit, the support element may have a recess that is part of the passageway, and a grille towards the rear side. The filter element is arranged in the recess. By this way mounting of the filter element prior to mounting the semi-permeable membrane is possible.

Since the filter element is mounted from the inside, independently of the semi-permeable membrane mounting, it can, if it is fixed by an additional fastening element. The filter element can be replaced by another consisting of a different medium, even if it has a different thickness. The fixation of the alternative filter element may be done by a corresponding change in the geometry of the fasting element or by a change in the end position of the fastening element through the assembly process. All other components and production steps may remain unaffected. This results in a venting unit which is advantageously very flexible in its filtration properties in order to meet the respective required specifications.

According to a favorable embodiment of the venting unit, the filter element may be arranged in direct contact to the semi-permeable membrane. Thus, a reliable protection of the semi-permeable membrane from particles and/or oil droplets may be achieved.

According to a favorable embodiment of the venting unit, a gap may be arranged between the semi-permeable membrane and the filter element. In particular, a spacer element may be arranged between the filter element and the semi-permeable membrane to provide the gap. In particular, the spacer element may be configured as a grille. By this way, the semi-permeable membrane may advantageously be stabilized against the ingress of water from the outside.

According to a favorable embodiment of the venting unit, a degree of coverage of an air-permeable area of the semi-permeable membrane may be at least 5%, preferably at least 15%, most preferably at least 25%, of a maximum cross-section of the passageway. In many cases, the maximum cross-section will be a cross-section of the recess in which the filter element is placed. Thus, effective venting effect of the venting unit may be maintained or even improved, despite the stabilizing effect of the grille for the semi-permeable membrane, as the membrane may be particularly protected against the contact with particles and/or oil drops in the specific area directly behind the grille.

According to a favorable embodiment of the venting unit, the venting unit further includes a fastening element configured to fixate the filter element on the support element. Easy mounting of the filter element in the manufacturing process may be achieved.

According to a favorable embodiment of the venting unit, the fastening element may have a grille for fixating of the filter element. Reliable fixation of the filter element to the venting unit may be achieved.

According to a favorable embodiment of the venting unit, the fastening element has an inflow protection configured to protect the filter element. Direct streaming of venting gases to the filter element may thus be prevented.

According to a favorable embodiment of the venting unit, the fastening element has a fluid inlet inclined to the axial direction of the passageway. The filter element may thus be protected from abrasive effects by fast streaming venting gases.

According to a favorable embodiment of the venting unit, the support element may have a recess, the recess having an opening to the rear side, wherein the filter element is arranged in the opening. Thus, in this embodiment, the filter element may advantageously be mounted from the rear side of the venting unit.

According to a favorable embodiment of the venting unit, the fastening element may be arranged at the opening of the recess. By this way, the filter element may easily be mounted to the venting unit.

According to a favorable embodiment of the venting unit, the venting unit further includes a protection cover for the semi-permeable membrane on the front side of the support element, the protection cover being fixed to the support element and having at least one fluid through-flow to the environment. Thus, the semi-permeable membrane may advantageously be protected from being damaged by something in the environment of the venting unit.

### Brief Description of Drawings

The present invention together with the above-mentioned and other objects and advantages may best be understood from the following detailed description of the embodiments, but not restricted to the embodiments, wherein is shown in:
Figure 1 is a venting unit for venting a machinery space according to an embodiment of the invention in an exploded view;
Figure 2 is the venting unit according to Fig. 1 from a front side in an isometric view;
Figure 3 is the venting unit according to Fig. 1 from a rear side in an isometric view;
Figure 4 is the venting unit according to Fig. 1 in a sectional view;
Figure 5 is a venting unit for venting a machinery space according to a further embodiment of the invention in an exploded view;
Figure 6 is the venting unit according to Fig. 5 from a front side in an isometric view;
Figure 7 is the venting unit according to Fig. 5 from a rear side in an isometric view;
Figure 8 is the venting unit according to Fig. 5 in a sectional view; and
Figure 9 is a detail X of the venting unit according to Fig. 8.

### Detailed Description

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

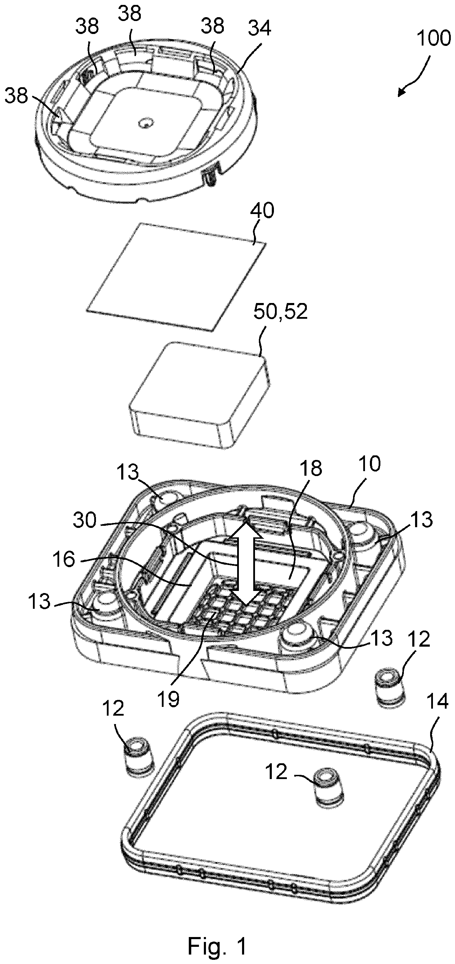

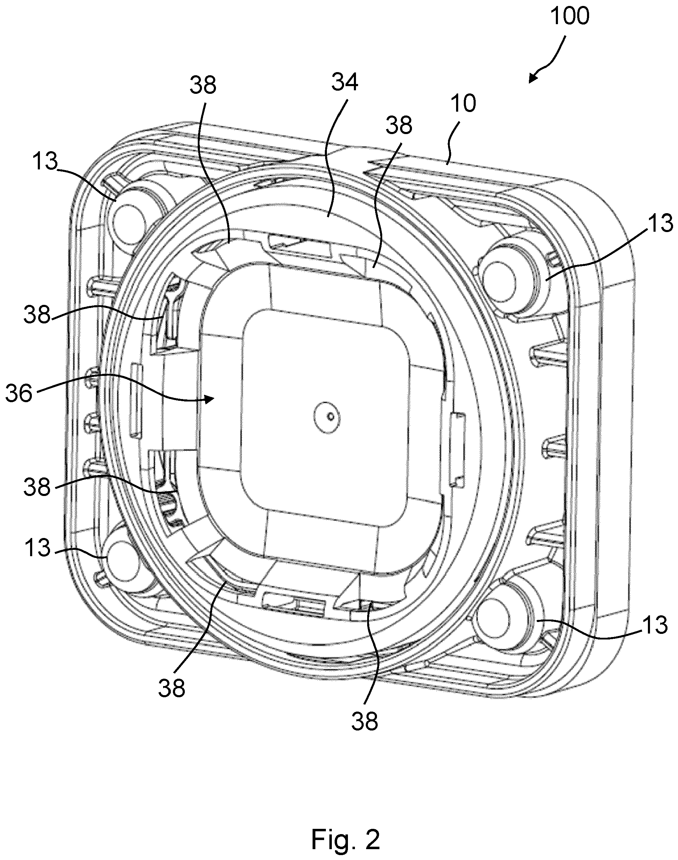

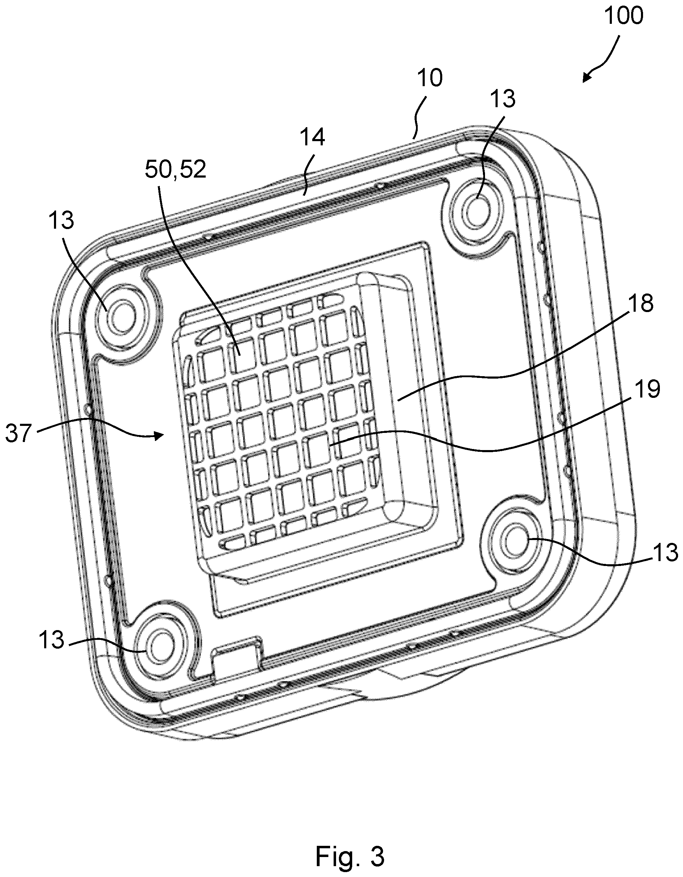

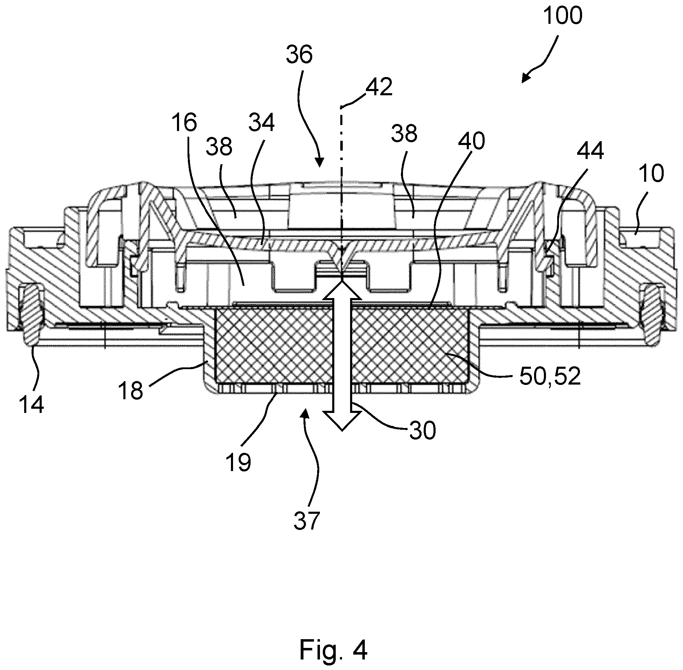

Figure 1 depicts a venting unit 100 for venting a machinery space according to an embodiment of the invention in an exploded view. Figure 2 depicts the venting unit 100 from a front side 36 in an isometric view, whereas in Figure 3 the venting unit 100 is shown from a rear side 37. In Figure 4 the venting unit 100 is depicted in a sectional view.

The machinery space may include, for example, a closed functional chamber of an electrical motor, in which wear parts (e.g., brushes) and/or oil mist are located and used. Alternatively, the machinery space may include a closed functional chamber including mechanical couplings (clutches) or brakes.

The venting unit 100 comprises a support element 10 with a front side 36 and a rear side 37 related to an axial direction 42 (Figure 4), with mounting elements 12 and a sealing element 14 for being mounted with the rear side 37 in a substantially fluid tight manner to an opening of the machinery space. The venting unit 100 has a fluid permeable passageway 16 for venting. The sealing element 14 is arranged on a circumference of the passageway 16 as is particularly to be seen in Figure 3.

The mounting elements 12 counteract during mounting of the venting unit 100 to the machinery space with the mounting domes 13 arranged in the corners of the support element 10.

The venting unit 100 further comprises a semi-permeable membrane 40, covering the passageway 16. The semi-permeable membrane 40 is arranged at the support element 10 in a fluid tight manner and may connected by gluing, welding, clamping or the like.

Further the venting unit 100 comprises a filter element 50, being arranged at the support element 10 within the passageway 16 between the semi-permeable membrane 20 and the machinery space in an intended mounting state. The filter element 50 comprises a depth and/or surface filtration medium 52.

The venting direction 30 is marked by an arrow being double-sided, as fluid like air may stream in both directions. The venting unit 100 is mainly intended for venting a machinery space from the rear side 37 of the venting unit 100 to the outside, yet as the venting unit 100 also is intended as a pressure compensation element air may also stream from the outside to the machinery space.

Pressure compensation of the machinery space may be necessary because of temperature and/or location changes, resulting in different air pressures at different heights. Pressure differences to the environment may occur, which must be compensated sufficiently quickly to avoid an inadmissible load on an existing sealing system of the housing or the housing itself, as this can lead to water ingress and/or particle and/or oil droplet leakage respectively.

The depth and/or surface filtration medium 52 may favorably comprise a nonwoven and/or a woven, as a flat filter element 50, in particular in a multiple folded configuration, and/or an open-celled foam-like medium, and/or a sponge-like medium, and/or a sintered thermoplastics or metal.

A nonwoven and/or woven may comprise glass fibers with a diameter between 5 µm and 20 µm, preferably between 9 µm and 15 µm, preferably from mechanically bonded carded nonwovens made from textile glass staple fibers.

A foam-like medium may have a porous structure between 20 ppi (pores per inch) and 150 ppi, preferably between 30 ppi and 120 ppi.

A sponge-like medium may have a packing density between 10% and 22%, preferably between 3% and 15%, particularly preferred between 5% and 10%.

A sintered thermoplastics may have a pore size between 1 ppi and 500 ppi, preferably between 2 ppi and 400 ppi, particularly preferred between 3 µm and 300 µm, and have a packing density between 4% and 90%, preferably between 6% and 80%. The sintered metal may have a pore size between 0.1 µm and 300 µm, preferably between 0.5 µm and 200 µm.

A protection cover 34 is for the semi-permeable membrane 40 on the front side 36 of the support element 10. The protection cover 34 is fixed to the support element 10, e.g. by connection elements 44 (Figure 4) such as a clamping system, and has several fluid through-flows 38 to the environment. The protection cover 34 protects the semi-permeable membrane 40 against influences from the outside.

A fastening element for fixation of the filter element 50 to the support element 10 may be provided if convenient.

In the embodiment depicted in Figures 1 to 4, sufficient support for the filter element 50 is integrated in the support element 10. The filter element 50 is mounted from the outside, after which the semi-permeable membrane 40 is also attached to the support element 10 from the outside in a sufficiently tight manner and, if required, the protective cover 34 may be also attached. The semi-permeable membrane 40 is thus in direct contact with the filter element 50, and may be mounted together with the filter element 50.

For accommodating the filter element 50, the support element 10 has a recess 18. The recess 18 is part of the passageway 16, having a grille 19 towards the rear side 37, wherein the filter element 50 is arranged in the recess 18. The recess 18 with the grille 19 may particularly be seen in Figure 3 where the rear side 37 of the venting unit 100 is depicted.

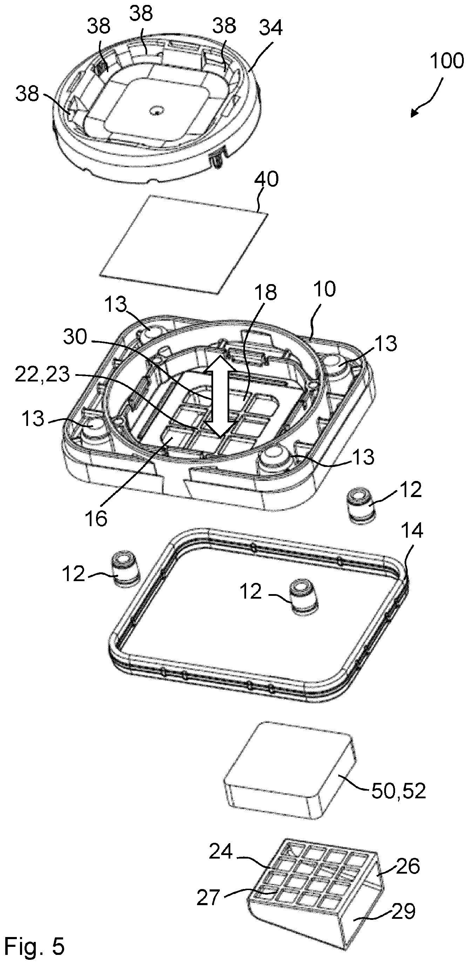

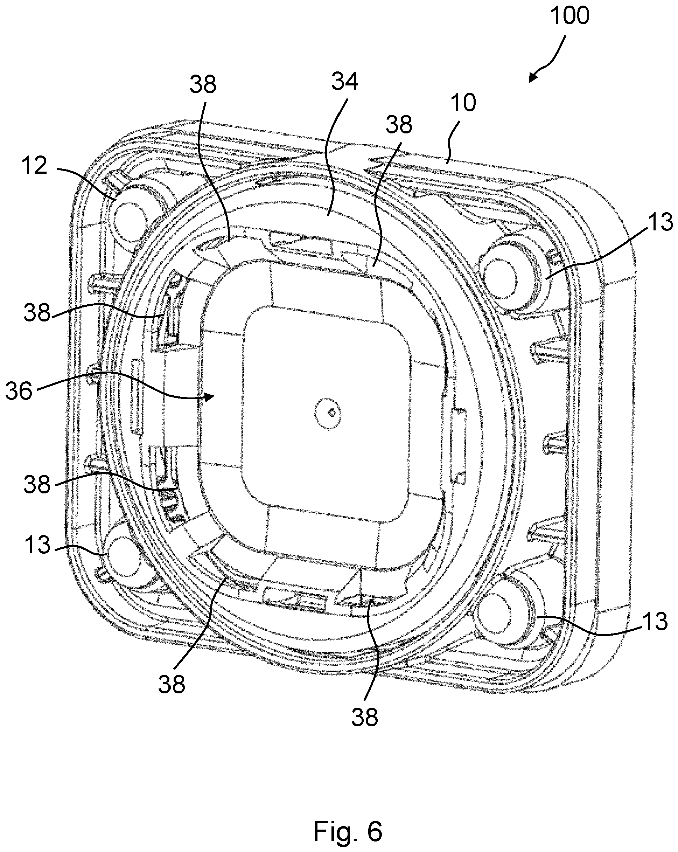

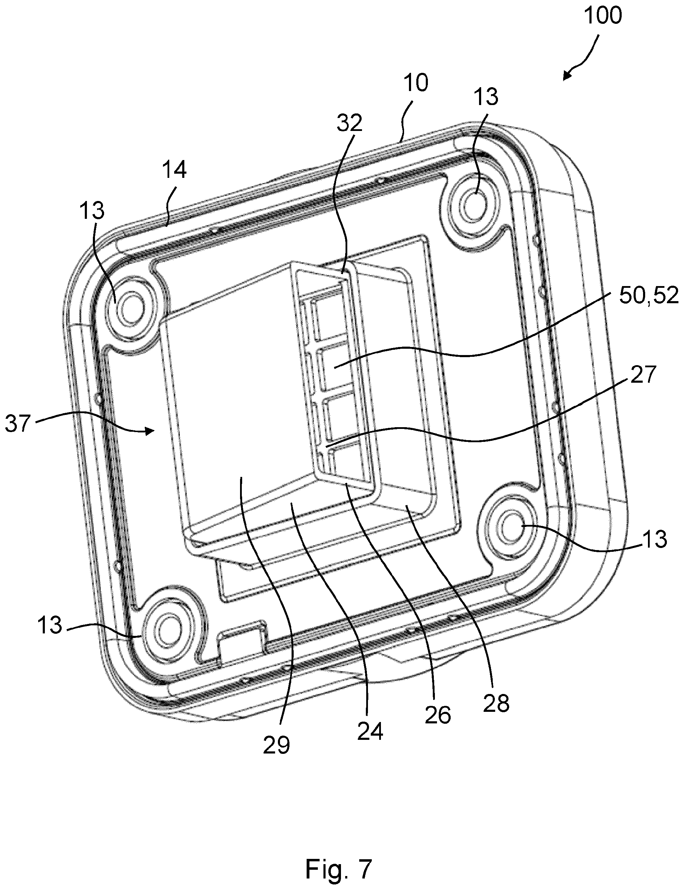

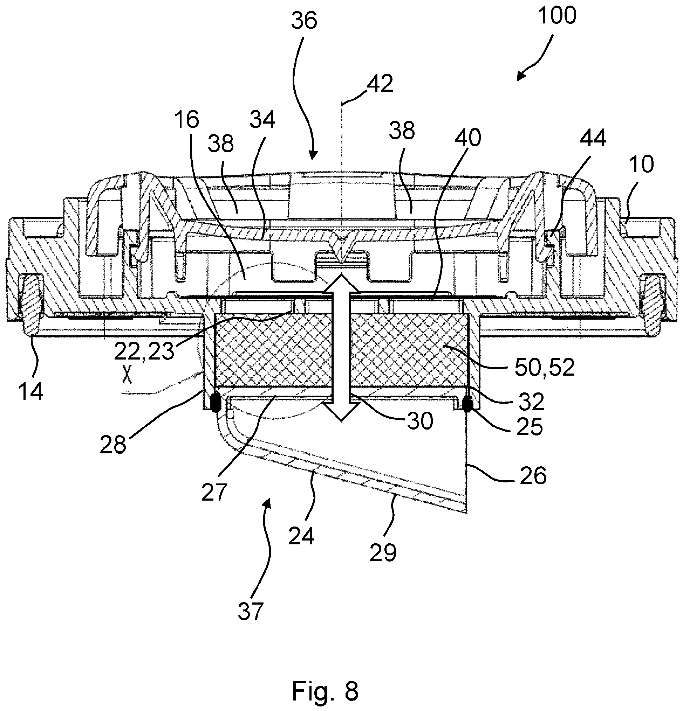

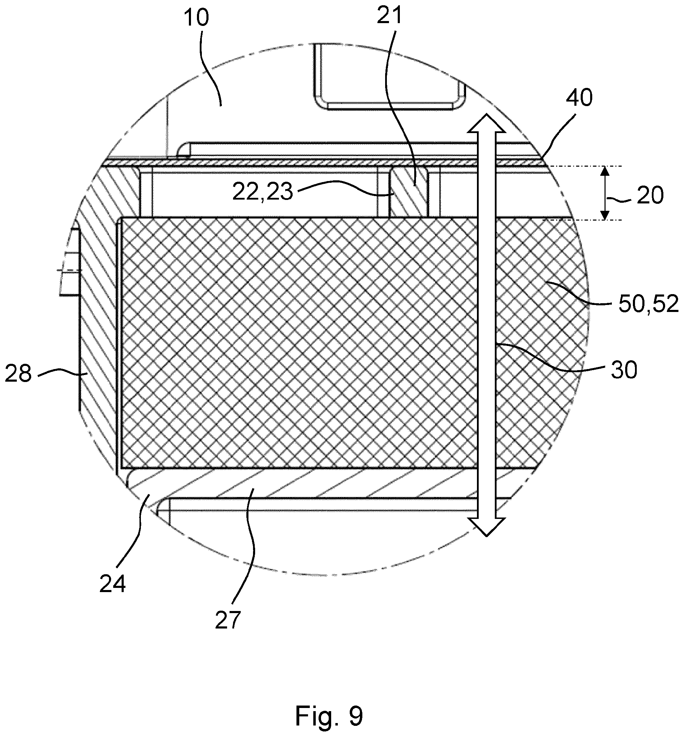

Figure 5 depicts a venting unit 100 for venting a machinery space according to a further embodiment of the invention in an exploded view. Figure 6 depicts the venting unit 100 from a front side 36 in an isometric view, whereas in Figure 7 the venting unit 100 is shown from a rear side 37. In Figure 8 the venting unit 100 is depicted in a sectional view. In Figure 9 a detail X of the venting unit 100 according to Fig. 8 is shown.

In this second embodiment, a spacer element 22 as a covering area is integrated internally in the support element 10 for the semi-permeable membrane 40, which provides additional protection for the membrane against direct contact with existing particles and/or oil droplets and at the same time ensures a defined distance between the semi-permeable membrane 40 and the filter element 50. Whereas in this embodiment, in contrast to the previously described first embodiment, the filter element 50 is mounted from the rear side 37, independently of the membrane mounting, as seen from the intended installation condition. If necessary, the filter element 50 may be fixed in the support element 10 by the additional fastening element 24 which, also if necessary, provides sufficient support for the filter element 50. The structure for the support of the filter element 50 is gas-permeable and, in particular, may be formed as a grille 27.

A gap 20 is provided between the semi-permeable membrane 40 and the filter element 50. In particular, as depicted in the Figures, the spacer element 22 may be arranged between the filter element 50 and the semi-permeable membrane 40 to provide the gap 20. In particular, the spacer element 22 may be configured as a grille 23, as shown in the Figures.

Advantageously, a degree of coverage of an air-permeable area of the semi-permeable membrane 40 may be at least 5%, preferably at least 15%, most preferably at least 25%, of a maximum cross-section of the passageway 16. Thus, there may be enough free space for fluid streaming from the machinery space through the passageway 16 to the outside.

The covering area of the semi-permeable membrane 40, which to a certain extent also serves as a support for the semi-permeable membrane 40, may preferably be designed in such a way that the gas-permeable area is composed of a plurality of openings which, at least in their majority, follow simple geometric shapes such as circles, squares, rectangles or the like, wherein a degree of coverage of the air-permeable covering on the inlet side and/or outlet side is at least 5%, in particular at least 15%, in particular at least 25%, of a maximum cross-section of the air-permeable passageway, in particular, a cross-section of the recess 18.

In Figure 9 the detail X exemplifies the coverage of the semi-permeable membrane 40 by the webs 21 of the grille 23.

The venting unit 100 further includes a fastening element 24 configured to fixate the filter element 50 on the support element 10. The fastening element 24 has a grille 27 for fixating of the filter element 50 and for supporting the filter element 50, despite enabling a favorable venting of the machinery space.

Further, as shown with the embodiment, the fastening element 24 has an inflow protection 29 configured to protect the filter element 50 together, and has a fluid inlet 26 inclined to the axial direction 42 of the passageway 16. In particular in the case of an inflow protection 29, the fastening element 24 may be fixed on the recess 28 of the support element 10 by welding points or a welding line 25 (Figure 8).

The support element 10 may be designed on the inside, i.e. upstream side, of the fluid when the pressure is reduced from the inside of the machinery space to the outside, in such a way that the filter element is protected from a direct upstream flow. Advantageously, a further deflection of the fluid may take place, which not all particles and/or oil droplets can follow depending on the flow dynamics. This inflow protection 29 may also preferably be attached to the fastening element 24 for the filter element 50.

For accommodating the filter element 50, the support element 10 has a recess 28. The recess 28 has an opening 32 to the rear side 37. The filter element 50 is arranged in the opening 32. Further, the fastening element 24 is arranged at the opening 32 of the recess 28.

### Reference Numbers

- 10: support element
- 12: mounting element
- 13: mounting dome
- 14: sealing element
- 16: passageway
- 18: recess
- 19: grille
- 20: gap
- 21: web
- 22: spacer element
- 23: grille
- 24: fastening element
- 25: welding points or line
- 26: fluid inlet
- 27: grille
- 28: recess
- 29: inflow protection
- 30: venting direction
- 32: opening
- 34: protection cover
- 36: front side
- 37: rear side
- 38: fluid through-flow
- 40: semi-permeable membrane
- 42: axial direction
- 44: connecting element
- 50: filter element
- 52: depth and/or surface filtration medium
- 100: venting unit

## Claims

1. A venting unit (100) for venting a machinery space, the venting unit (100) comprising
a support element (10) with a front side (36) and a rear side (37) that are related to an axial direction (42);
one or more mounting elements (12) and a sealing element (14) for being mounted with the rear side (37) in a substantially fluid tight manner to an opening of the machinery space, the support element (10) having a fluid permeable passageway (16) for venting, and the sealing element (14) being arranged surrounding the passageway (16);
a semi-permeable membrane (40) covering the passageway (16) and being arranged at the support element (10) in a fluid tight manner;
a filter element (50) being arranged at the support element (10), within the passageway (16), and between the semi-permeable membrane (20) and the machinery space,
wherein the filter element (50) comprises a depth and/or surface filtration medium (52).

2. The venting unit according to claim 1, wherein the depth and/or surface filtration medium (52) comprises a nonwoven and/or a woven, as a flat filter element (50), in particular in a multiple folded configuration.

3. The venting unit according to claim 2, wherein the nonwoven and/or the woven comprises glass fibers with a diameter between 5 µm and 20 µm, preferably between 9 µm and 15 µm, preferably from mechanically bonded carded nonwovens made from textile glass staple fibers.

4. The venting unit according to claim 1, wherein the depth and/or surface filtration medium (52) comprises an open-celled foam-like medium, and/or a sponge-like medium, and/or a sintered thermoplastics or metal.

5. The venting unit according to claim 4, wherein the foam-like medium has a porous structure between 20 ppi and 150 ppi, preferably between 30 ppi and 120 ppi, and/or
wherein the sponge-like medium has a packing density between 10% and 22%, preferably between 3% and 15%, particularly preferred between 5% and 10%, and/or
wherein the sintered thermoplastics has a pore size between 1 ppi and 500 ppi, preferably between 2 ppi and 400 ppi, particularly preferred between 3 µm and 300 µm, and has a packing density between 4% and 90%, preferably between 6% and 80%, and/or
wherein the sintered metal has a pore size between 0.1 µm and 300 µm, preferably between 0.5 µm and 200 µm.

6. The venting unit according to any one of the preceding claims, wherein the support element (10) has a recess (18) that is part of the passageway (16), and a grille (19) towards the rear side (37), and
wherein the filter element (50) is arranged in the recess (18).

7. The venting unit according to any one of the preceding claims, wherein the filter element (50) is arranged in direct contact to the semi-permeable membrane (40).

8. The venting unit according to any one of the claims 1 to 6, wherein a gap (20) is arranged between the semi-permeable membrane (40) and the filter element (50), in particular, wherein a spacer element (22) is arranged between the filter element (50) and the semi-permeable membrane (40) to provide the gap (20), in particular, wherein the spacer element (22) is configured as a grille (23).

9. The venting unit according to claim 8, wherein a degree of coverage of an air-permeable area of the semi-permeable membrane (40) is at least 5%, preferably at least 15%, most preferably at least 25%, of a maximum cross-section of the passageway (16), in particular, a cross-section of the recess (18).

10. The venting unit according to any one of the claims 1 to 5, further comprising a fastening element (24) configured to fixate the filter element (50) on the support element (10).

11. The venting unit according to claim 10, wherein the fastening element (24) has a grille (27) for fixating of the filter element (50).

12. The venting unit according to claim 10 or 11, wherein the fastening element (24) has an inflow protection (29) configured to protect the filter element (50).

13. The venting unit according to any one of the claims 10 to 12, wherein the fastening element (24) has a fluid inlet (26) inclined to the axial direction (42) of the passageway (16).

14. The venting unit according to any one of the claims 10 to 13, wherein the support element (10) has a recess (28), the recess (28) having an opening (32) to the rear side (37), and
wherein the filter element (50) is arranged in the opening (32).

15. The venting unit according to claim 14, wherein the fastening element (24) is arranged at the opening (32) of the recess (28).
